# EUROPÄISCHE PATENTSCHRIFT

(11) **EP 1 151 897 B1**
(45) Veröffentlichungstag und Bekanntmachung des Hinweises auf die Patenterteilung: **26.01.2005**
(21) Anmeldenummer: 00109455.6
(22) Anmeldetag: 03.05.2000
(51) Int. Cl.: B60R 16/02

(54) **Computerisiertes Steuersystem**
Computerized control system
Système de commande informatisé

(43) Veröffentlichungstag der Anmeldung: 07.11.2001
(73) Patentinhaber: Joseph Vögele AG, D-68146 Mannheim (DE)
(72) Erfinder: Eul, Achim, Dipl.-Ing., 68219 Mannheim (DE); Liebrenz, Wolfgang, Dipl.-Ing., 68169 Mannheim (DE)
(74) Vertreter: Grünecker, Kinkeldey, Stockmair & Schwanhäusser Anwaltssozietät

(56) Entgegenhaltungen:
- EP-A- 0 779 201
- DE-A- 19 505 845
- DE-C- 19 511 755
- US-A- 5 037 308
- US-A- 5 469 150

## Beschreibung

Die Erfindung betrifft ein computerisiertes Steuersystem gemäß Oberbegriff des Patentanspruchs 1.

Für Straßenfertiger existieren in der Praxis bereits auf modernen Bus-Technologien basierende Steuerungskonzepte. Gemäß DE 196 05 926 (Oberbegrift von Anspruch 1) werden in einem Straßenfertiger dezentrale Steuerungseinheiten genutzt, die verschiedene Funktionen übemehmen und über einen CAN-Bus miteinander kommunizieren. Wird eine der untereinander gleichen Verarbeitungseinheits-Komponenten ausgetauscht, dann ist kein Konfigurationsaufwand erforderlich. Die Verarbeitungseinheits-Komponenten weisen nämlich Einrichtungen zum Erkennen spezifischer Aufgaben und zum Aktivieren spezifischer Schaltkreiselemente und/oder Softwareblöcke auf.

Bei einem aus US 5 469 150 bekannten Steuersystem sind verschiedene Komponenten an ein Bussystem angeschlossen. Es gibt smarte Komponenten, die einen CAN-Prozessor aufweisen, und direkt kommunizieren sowie einfache Komponenten, die über ein Multiport-Anschlusssystem kommunizieren, das als intelligenter Knoten ausgebildet ist. Dem Knoten sind Adressen zur Kommunikation zugeordnet. Die übertragenen Nachrichten enthalten ein entsprechendes Adressenfeld bzw. ein Identifikationsfeld.

Bei einer aus DE 195 11 755 C bekannten Multiplex-Steuerung von Komponenten in Kraftfahrzeugen sind in Gehäusen von Steckverbindem Multiplex-Bus-Elektronikbausteine als dialogfähige Elektronikelemente am Ort der jeweiligen Komponente vorgesehen. Die Bausteine sind Leiterplatten mit jeweils einem CAN-Bus-Elektronikchip und einem Leistungsteil.

Weiterer Stand der Technik ist enthalten in US-A-5 469 150, DE-A-195 05 845 und US-A-5 037 308.

Der Erfindung liegt die Aufgabe zugrunde, ein computerisiertes Steuersystem für Maschinensteuerungen in allgemeiner Form und im Besonderen für Baumaschinen wie Straßenfertiger, insbesondere für einen Straßenfertiger mit elektronischem Nivellierungssystem für die Einbaubohle, anzugeben, bei der bei Anschluss oder Austausch einer Komponente deren Identifizierung bzw. Initialisierung ohne jeglichen manuellen Konfigurationsaufwand möglich ist. Dies soll im Wesentlichen für Systeme mit häufig auszutauschenden Komponenten gelten, z.B. innerhalb der Sensorik für die Nivellierung an einem Straßenfertiger. Das Steuersystem soll ferner für unterschiedlichste Komponentenanordnungen mit einer gemeinsamen Hardware-Basis ein breites Produktspektrum abdecken, beispielsweise trotz variierender Parameter wie der Maschinengattung, der Anbauordnung, der Komponentenarten und spezieller Systemparameter, um nicht für jede Maschine oder Maschinengattung ein eigenes Steuersystem maßschneidem zu müssen.

Die gestellte Aufgabe wird mit den Merkmalen des Patentanspruchs 1 gelöst.

In komponententechnischer Hinsicht sind zwei Ausführungsformen vorteilhaft. Die Komponente, beispielsweise ein Sensor, wird in der Anschlussdose an einer CAN-Schnittstelle angeschlossen. Die Komponente ist jederzeit abnehmbar und leicht austauschbar, beispielsweise gegen eine andere oder eine gleiche Komponente. Ist der CAN-Schnittstellen-Mikroprozessor in der Anschlussdose untergebracht ("intelligente Anschlussdose"), kann die Komponente relativ einfach sein, weil sie nur den ein Identifikationselement darstellenden Kennwiderstand benötigt. Der CAN-Schnittstellenprozessor in der Anschlussdose werten den Kennwiderstand bzw. die Informationen der Auswertungselektronik der Komponente aus und übersetzt diese Informationen in entsprechende CAN-Nachrichten für die Maschinensteuerung. Bei der anderen Ausführungsform ist die Komponente mit dem integrierten CAN-Schnittstellenprozessor als beispielsweise kundenspezifische Lösung aufwendiger, während die Anschlussdose einfacher ist und nur ihren Kennwiderstand enthält. Die "Intelligenz" ist hier in einen die Komponente darstellenden Sensor eingegliedert. Der Sensor wertet für seine Intitialisierung den Kennwiderstand der Anschlussdose aus. Sensorinformationen werden über den CAN-Bus direkt an die Maschinensteuerung übertragen. Allerdings ist wichtig, dass der Sensor eine Möglichkeit für die Auswertung des Kennwiderstandes besitzt. Auf diese Weise sind bei beiden Ausführungsformen die komponententechnischen Voraussetzungen zur Identifizierung der angeschlossenen Komponente ohne jeglichen manuellen Konfigurationsaufwand durch den Anwender gegeben. Dieses Konzept ist besonders zweckmäßig für häufig auszutauschende Komponenten, z.B. die Sensoren der Sensorik eines Einbaubohlen-Nivelliersystems eines Straßenfertigers und beruht auf einer Hardware-Basis, mit der sich bei sehr unterschiedlichen Komponentenanordnungen unterschiedliche Maschinen und unterschiedliche Maschinengattungen in einer Maschinenserie abdecken lassen.

Da die Komponente mittels eines Steckers in der Anschlussdose angebracht wird, ist es zweckmäßig, zumindest den Kennwiderstand in den Stecker einzugliedern. Dies ermöglicht eine noch einfachere Ausbildung der Komponente. Gegebenenfalls ist auch der CAN-Schnittstellen-Mikroprozessor in den Stecker implementiert. Durch diese ergänzende Ausstattung des Steckers lässt sich sowohl der Sensor als auch der Stecker jederzeit einfach nachrüsten.

Speziell bei einer intelligenten Anschlussdose mit implementiertem CAN-Schnittstellen-Mikroprozessor kann es zweckmäßig sein, in der Anschlussdose einen zusätzlichen Kennwiderstand vorzusehen, der eine von der Maschinensteuerung oder anderen Busteilnehmern benötigte Aussage bezüglich der Anbausituation der Anschlussdose geben kann.

Zweckmäßig umfasst das computerisierte Steuersystem das elektronische Nivelliersystem für die Einbaubohle eines Straßenfertigers. Die elektronische Sensoren enthaltende Sensorik ist über Stecker und Anschlussdosen in das Steuersystem eingegliedert. Bei Anschließen eines Sensors oder bei Austauschen eines Sensors ist keine manuelle Konfiguration durch den Anwender erforderlich, um die jeweils angeschlossene Komponenten zu identifizieren und zu initialisieren. Dies ist zweckmäßig für die häufig auszutauschenden Sensoren des Nivelliersystems des Straßenfertigers.

Jeder Sensor des Nivelliersystems enthält ein Sensorelement und eine Auswerteelektronik. Falls in der Anschlussdose ein CAN-Schnittstellen-Mikroprozessor enthalten ist, benötigt der Sensor den Kennwiderstand, der von dem Prozessor lesbar ist. Weist der Sensor hingegen bereits den CAN-Schnittstellen-Mikroprozessor auf, dann wird nur in der Anschlussdose ein Kennwiderstand benötigt, den der Mikroprozessor auszuwerten vermag.

Im Falle des mit dem CAN-Schnittstellen-Mikroprozessor ausgestatteten Sensors benötigt dieser auch eine Auswerteelektronik für den in der Anschlussdose angeordneten Kennwiderstand.

Um die gestellte Aufgabe auch in informationstechnischer Hinsicht zu lösen, d.h. jeglichen manuellen Konfigurationsaufwand durch den Anwender zu vermeiden, wenn eine Komponente angeschlossen oder ausgetauscht wird, sollte jede einen Busteilnehmer bildende Komponente über wenigstens ein Standard-Sende-Datenobjekt verfügen, das jeweils in einen Identifikationsteil und einen Datenteil gegliedert und über den CAN-Bus zu übertragen ist. Dieses Objekt repräsentiert eine Nachricht für ein CAN-Bussystem mit einem speziellen, nachrichtenorientierten Übertragungsprotokoll. Das von einem Busteilnehmer übertragene Standard-Sende-Datenobjekt wird von allen anderen Busteilnehmem ausgewertet, die dann intern entscheiden, ob sie die in dem Objekt enthaltenen Daten weiterverarbeiten oder nicht.

Zweckmäßigerweise verfügt jeder Busteilnehmer über mehrere Datenobjekte. Mit einem Konfigurations-Standard-Sende-Datenobjekt werden in dessen Datenbereich Informationen über Ort und Typ und dgl. des Busteilnehmers übermittelt. Dies sind für die Maschinensteuerung wichtige Informationen, obwohl sie auch von anderen Busteilnehmem als wichtig angenommen werden können.

Hingegen wird mit einem Daten-Standard-Sende-Datenobjekt in dessen Datenbereich eine Information über Messwerte, Systemzustände usw. an die anderen Busteilnehmer, ggfs. auch an die Maschinensteuerung, übermittelt.

Mit einem erweiterten Sende-Datenobjekt werden z.B. über dessen Identifikationsteil Informationen über die Quelle und das Ziel der Übertragung übermittelt. Es lässt sich hierbei eine Punkt-zu-Punkt-Verbindung zwischen zwei oder mehreren Busteilnehmern herstellen, die einen direkten Datenaustausch gestattet.

Schließlich enthalten Empfangs-Datenobjekte in ihrem Datenteil von anderen Busteilnehmem übertragene Informationen zur internen Weiterverarbeitung.

Zur eindeutigen Identifizierung und zur informationstechnischen Klassifizierung der Komponenten weist das Steuersystem einen Mechanismus auf, der kontinuierlich und zyklisch den Status des Systems überwacht und analysiert. Die Komponenten erkennen selbsttätig die jeweilige Information zum Anbringungsort, melden sich am CAN-Bus an und nehmen dort ihren Betrieb auf. Jeder Zyklus wird in so viele Zeiteinheiten strukturiert, wie es der maximalen Anzahl der Busteilnehmer entspricht. Ein ausgewählter Busteilnehmer beginnt den Zyklus vorzugsweise mit der Übermittlung einer "Null" und sendet seine Informationen, z.B. mit Konfigurations-Standard-Sende-Datenobjekten über Ort und Typ. Alle anderen Busteilnehmer sind empfangsbereit für das erste Element des Zyklusses und starten nach dessen Empfang ihre interne Uhr zur Zyklussteuerung. Mit Fortschreiten der Zykluseigenschaften schalten alle Busteilnehmer synchron für die entsprechende Zykluseinheit ein Empfangs-Datenobjekt, ausgenommen derjenige Busteilnehmer, dessen Teilnehmer-Identifikationsnummer bzw. -ort der entsprechenden Zyklus-Einheit-Identifikationsnummer entspricht. Dieser Busteilnehmer richtet unter der entsprechenden Nummer ein beispielsweise Konfigurations-Standard-Sende-Datenobjekt ein und sendet seine Identifikationsinformationen über Ort und Typ über den CAN-Bus. Auf diese Weise kann jeder Busteilnehmer innerhalb eines Zyklusses eine Tabelle mit allen vorhandenen Busteilnehmern anlegen. Diese Tabelle wird dann als Entscheidungsgrundlage für die Festlegung der jeweiligen Kommunikationsteilnehmer benutzt.

Anhand der Zeichnung werden Ausführungsformen des Erfindungsgegenstandes erläutert. Es zeigen:
- Fig. 1: eine schematische Draufsicht auf einen mit einer Einbaubohle mit Nivelliersystem ausgestatteten Straßenfertiger als Beispiel einer ein computerisiertes Steuersystem enthaltenden Maschine,
- Fig. 2: eine erste Ausführungsform des Anschlusskonzepts einer Komponente an das Steuersystem,
- Fig. 3: eine andere Ausführungsform des Anschlussprinzips einer Komponente, und
- Fig. 4A -E: informationstechnische Schemata zu Datenobjekten, mittels derer in dem Steuersystem kommuniziert wird.

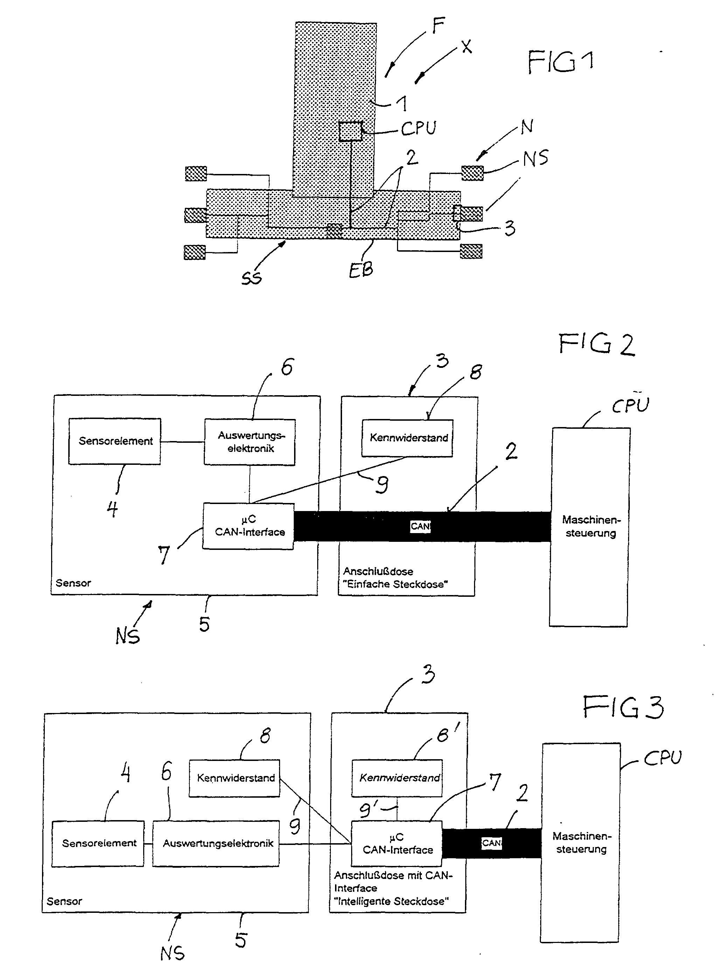

In Fig. 1 ist schematisch eine Maschine X mit einem computerisierten Steuersystem SS beispielhaft anhand eines Straßenfertigers F mit einer Einbaubohle B und einem elektronischen Nivelliersystem N gezeigt. Der Straßenfertiger F besitzt einen Fahrteil 1 mit den üblichen, hier nicht gezeigten Ausstattungen. Die Einbaubohle EB ist an den Fahrteil 1 angehängt. Die Einbaubohle EB lässt sich mit nicht gezeigten Stelleinrichtungen relativ zum Fahrteil 1 verstellen, wobei das Steuersystem SS zum Nivellieren der Einbaubohle EB mittels des an diese angebrachten elektronischen Nivelliersystems N dient. In dem Nivelliersystem N ist eine Vielzahl von Komponenten, beispielsweise Sensoren NS, in unterschiedlichen Positionen, für unterschiedliche Funktionen und in unterschiedlichen Typen enthalten. Diese Komponenten sind an einen CAN-Bus 2 austauschbar angeschlossen, an den auch eine Maschinensteuerung CPU angeschlossen ist. Für den Anschluss jeder Komponente, bzw. jedes Sensors NS, an den CAN-Bus 2 dient eine Anschlussdose 3, wobei das Verbindungsprinzip deutlicher anhand der Fig. 2 und 3 erläutert werden wird. Die Anschlussdosen 3 sind an den erforderlichen Positionen an der Einbaubohle EB und/oder am Fahrteil 1 und/oder an nicht näher hervorgehobenen Hilfskonstruktionen angebracht und an den CAN-Bus 2 angeschlossen.

In Fig. 2 ist ein Anschlussprinzip gezeigt, bei dem als busteilnehmende Komponente ein relativ aufwendiger Sensor NS über die Anschlussdose 3 an den CAN-Bus 2 angeschlossen ist. Der Sensor NS enthält in einem Gehäuse 5 wenigstens ein Sensorelement 4, eine Auswertungselektronik 6 und einen CAN-Schnittstellen-Mikroprozessor 7. Die Anschlussdose 3 enthält hingegen nur den CAN-Bus 2 und ein Identifikationselement 8, beispielsweise einen Kennwiderstand, der der Anschlussdose 3 zugeordnet ist. Beim Anschließen des Sensors NS an die Anschlussdose 3 wird der Prozessor 7 an den CAN-Bus 2 angeschlossen und auch eine Verbindung 9 zwischen dem Prozessor 7 und dem Identifikationselement 8 hergestellt.

Die "Intelligenz" dieses Verbindungskonzepts befindet sich im Sensor NS selbst. Der Sensor NS bzw. der Prozessor 7 wertet für die Initialisierung das Identifikationselement 8 der Anschlussdose 3 aus. Die in der Steuerung benötigte Sensorinformationen werden dann direkt an die Maschinensteuerung CPU über den CAN-Bus 2 übertragen. Die Anschlussdose 3 ist baulich einfach, da sie nur das kennzeichnende Identifikationselement 8 beinhaltet. Der Sensor NS besitzt in dieser Konfiguration eine Möglichkeit, das Identifikationselement 8 in der Anschlussdose 3 auszuwerten.

Bei dem in Fig. 3 gezeigten Verbindungskonzept handelt wird ein baulich einfacherer, einen Busteilnehmer bzw. eine Komponente bildender Sensor NS angeschlossen, während die "Intelligenz" des Verbindungskonzepts in der aufwendiger gestalteten Anschlussdose 3 untergebracht ist.

Der Sensor NS enthält in seinem Gehäuse 5 wenigstens ein Sensorelement 4 und eine Auswertungselektronik 6. Ferner ist im Sensor NS ein Identifikationselement 8, beispielsweise ein Kennwiderstand, enthalten. In der Anschlussdose 3 ist der CAN-Schnittstellen-Mikroprozessor 7 enthalten und an den CAN-Bus 2 angeschlossen. Beim Verbinden des Sensors NS mit der Anschlussdose 3 wird nicht nur eine Verbindung zwischen der Auswertungselektronik und dem Mikroprozessor 7 hergestellt, sondern auch eine Verbindung 9 vom Mikroprozessor 7 zum Identifikationselement 8. Als das jeweilige Identifikationselement 8 kann nicht nur ein Kennwiderstand verwendet werden, sondern es bieten sich hierfür auch andere Elektronikbausteine an. Nach Herstellen der Verbindung wertet der Mikroprozessor 7 in der Anschlussdose 3 die Informationen der Auswertungselektronik 6 aus und übersetzt diese in entsprechende CAN-Nachrichten für die Maschinensteuerung CPU oder für andere Busteilnehmer.

In der Anschlussdose 3 kann ein zusätzliches Identifikationselement 8' implementiert sein, das eine Aussage bezüglich der Anbausituation der Anschlussdose 3 gibt.

In Fig. 3 ist das Identifikationselement 8 im Gehäuse des Sensors NS gezeigt. Da der Sensor NS mittels eines nicht gezeigten Steckers an die Anschlussdose angeschlossen wird, könnte das Identifikationselement 8 (gegebenenfalls auch der Mikroprozessor 7) in diesem Stecker untergebracht werden. Dies gestattet eine einfache Nachrüstung oder einen einfachen Austausch. Zwischen dem zusätzlichen Identifikationselement 8' in der Anschlussdose 3 und dem Mikroprozessor 7 kann eine feste Verbindung 9' vorgesehen sein.

Um innerhalb der Steuerung die Komponenten bzw. Busteilnehmer eindeutig identifizieren und informationstechnisch klassifizieren zu können, ist ein Mechanismus nötig, der kontinuierlich und zyklisch den Status des Systems überwacht und analysiert. Um jeglichen manuellen Aufwand zur Konfiguration des Systems bei Anschluss oder Austausch einer Komponente zu vermeiden, müssen die Komponenten selbständig die Information zum Anbringungsort erkennen, sich am CAN-Bus anmelden, und ihren Betrieb am CAN-Bus aufnehmen.

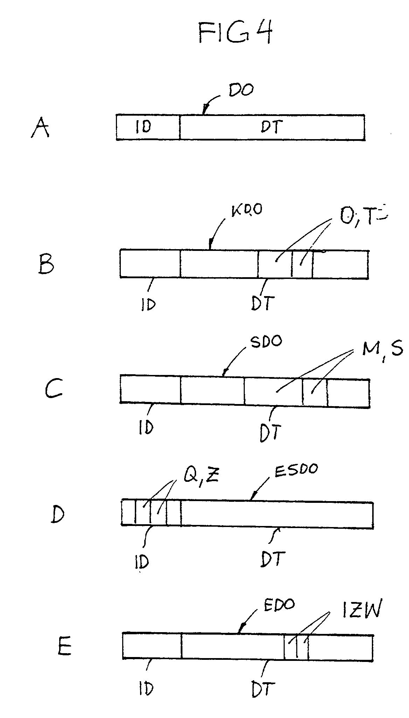

Bei dem gezeigten Steuersystem wird ein CAN-Bus 2 eingesetzt, der mit einem speziellen nachrichtenorientierten Übertragungsprotokoll arbeitet. Die Nachrichten werden typischerweise in einen identifizierenden Bereich und in einen Datenbereich gegliedert. In dem Steuersystem werden beispielsweise bestimmte Datenobjekte als Nachrichten übermittelt, über die jeder Bus-Teilnehmer verfügt, und die anhand der Fig. 4A bis E erläutert werden.

Fig. 4A verdeutlicht ein Standard-Sende-Datenobjekt DO, das beispielsweise aus Feldem aufgebaut ist und aus dem identifizierenden Teil ID und einem Datenteil DT besteht.

Mit Versenden eines Standard-Sende-Datenobjekts DO durch einen Busteilnehmer werden alle anderen Busteilnehmer dazu gebracht, intern zu entscheiden, ob sie die in diesem Datenobjekt enthaltenen Daten weiterverarbeiten oder nicht.

Bei den Standard-Sende-Datenobjekten DO gemäß Fig. 4A gibt es zwei verschiedenen Arten, nämlich ein Konfigurations-Standard-Sende-Datenobjekt KDO, gemäß Fig. 4B und ein Daten-Standard-Sende-Datenobjekt SDO gemäß Fig. 4C.

Ein Konfigurations-Standard-Sende-Datenobjekt KDO, gegliedert in den identifizierenden Teil ID und den Datenteil DT, sind im Datenbereich Informationen über Ort und Typ und dgl. des Busteilnehmers enthalten, der dieses Datenobjekt übermittelt.

Das Daten-Standard-Sende-Datenobjekt SDO gemäß Fig. 4C enthält hingegen in seinem Datenteil DT Informationen M, S über Messwerte, Systemzustände usw., die an die anderen Busteilnehmer übermittelt und von diesen gelesen werden können.

Ferner benutzen die Busteilnehmer das erweiterte Sende-Datenobjekt ESDO gemäß Fig. 4D, das in seinem identifizierenden Teil ID Informationen Q, Z über die Quelle und das Ziel usw. der Übertragung enthält. Mit diesem Datenobjekt lässt sich eine Punkt-zu-Punkt-Verbindung zwischen mindestens zwei Busteilnehmern aufbauen, die einen direkten Datenaustausch erlaubt.

Schließlich werden auch Empfangs-Datenobjekte EDU gemäß Fig. 4E benutzt, in denen im Datenteil DT Informationen IZW zur internen Weiterverarbeitung beim Empfänger enthalten sind, und die von anderen Busteilnehmem übermittelt werden.

Bei der erwähnten kontinuierlichen und zyklischen Überwachung und Analyse des Status des Systems wird ein Zyklus in so viele Zeiteinheiten strukturiert, wie maximal Busteilnehmer vorgesehen sind. Ein ausgewählter Busteilnehmer beginnt den Zyklus vorzugsweise mit der Übertragung einer "Null" und sendet eine Informationen, z.B. über ein Konfigurations-Standard-Sende-Datenobjekt KDO gemäß Fig. 4B über Ort und Typ aus. Alle anderen Busteilnehmer sind empfangsbereit für das erste Element des Zyklusses und starten nach dessen Empfang ihre internen Uhren zur Zyklussteuerung. Mit Fortschreiten der Zykluseigenschaften schalten alle Busteilnehmer synchron für die entsprechende Zykluseinheit ein Empfangs-Datenobjekt, ausgenommen der Busteilnehmer, dessen Teilnehmer-Identifikationsnummer bzw. Teilnehmer-Identifikationsort der entsprechenden Zyklus-Einheit-Identifikationsnummer entspricht. Dieser Busteilnehmer richtet unter der entsprechenden Nummer ein Sendeobjekt, z.B. ein Konfigurations-Standard-Sende-Datenobjekt, ein und sendet seine Identifikationsinformationen über Ort und Typ aus. Jeder Busteilnehmer legt innerhalb eines Zyklusses eine Tabelle mit allen vorhandenen Teilnehmern an. Diese Tabelle ist die Entscheidungsgrundlage für die Festlegung der jeweiligen Kommunikationsteilnehmer. Danach ist das Steuersystem initialisiert und sind die Busteilnehmer identifiziert.

Im Falle größerer Datenmengen werden in der Datenebene der Nachrichten Sub-Adressen definiert, die mindestens ein Byte groß sind.

## Patentansprüche

1. Computerisiertes Steuersystem einer Baumaschine (X), insbesondere eines Straßenfertigers (F), mit Daten generierenden und/oder auf übermittelte Daten reagierenden, in das Steuersystem eingegliederten Komponenten (NS), mit einem an eine Maschinensteuerung (CPU) angeschlossenen CAN-Bus (2), an den die Komponenten als Busteilnehmer in Schnittstellen angeschlossen sind, denen CAN-Schnittstellen-Mikroprozessoren (7) zugeordnet sind, **dadurch gekennzeichnet, dass** jede Schnittstelle eine Anschlussdose (3) für mindestens eine Komponente (NS) aufweist, dass der CAN-Schnittstellen-Mikroprozessor (7) entweder in die Anschlussdose (3) oder in die Komponente (NS) eingegliedert ist, und dass als ein elektronisches Identifikationselement (8, 8') wenigstens ein Kennwiderstand in die Anschlussdose (3) und/oder in die Komponente (N/S) implementiert ist.

2. Computerisiertes Steuersystem nach Anspruch 1, **dadurch gekennzeichnet, dass** die Komponente (NS) einen in der Anschlussdose (3) angebrachten Stecker umfasst, und dass der Kennwiderstand im Stecker angeordnet ist.

3. Computerisiertes Steuersystem nach Anspruch 1, **dadurch gekennzeichnet, dass** in der Anschlussdose (3) zusätzlich ein Anbausituations-Kennwiderstand vorgesehen oder der in der Anschlussdose (3) vorgesehene Kennwiderstand zusätzlich als Anbausituations-Kennwiderstand ausgebildet ist.

4. Computerisiertes Steuersystem nach wenigstens einem der vorhergehenden Ansprüche, **dadurch gekennzeichnet, dass** die Komponenten (NS) elektronische Sensoren eines elektronischen Einbaubohlen-Nivelliersystems (N) eines Straßenfertigers (F) sind, und dass die Sensoren austauschbar an den CAN-Bus (2) angeschlossen sind.

5. Computerisiertes Steuersystem nach Anspruch 4, **dadurch gekennzeichnet, dass** jeder Sensor (NS) wenigstens ein Sensorelement und eine Auswertelektronik (6) für den Kennwiderstand aufweist.

6. Computerisiertes Steuersystem nach Anspruch 1, **dadurch gekenntzeichnet,** dass die Komponente (NS) über wenigstens ein Standard-Sende-Datenobjekt (DO) verfügt, jeweils gegliedert in einen Identifikationsteil (ID) und einen Datenteil (DT), und dass der Datenteil (DT) Informationen (OT) entweder über den Ort und den Typ und dgl. der Komponente und/oder über zu übermittelnde Messwerte, Systemzustände, oder dgl. enthält.

7. Computerisiertes Steuersystem nach Anspruch 1, **dadurch gekennzeichnet, dass** zumindest eine Komponente (NS) über ein erweitertes Sende-Daten-Objekt (ESDO) für eine Punkt-zu-Punkt-Übertragung zwischen Busteilnehmern verfügt, das in seinem Identifikationsteil (ID) Informationen (QZ) über die Quelle und wenigstens ein Ziel der Übertragung enthält.

8. Computerisiertes Steuersystem nach Anspruch 1, **dadurch gekennzeichnet, dass** zumindest eine Komponente (NS) über ein Empfangs-Daten-Objekt (EDO) verfügt, das in seinem Datenteil (DT) Informationen für eine interne Datenweiterverarbeitung durch den Empfänger enthält.

9. Computerisiertes Steuersystem nach Anspruch 1, **dadurch gekennzeichnet, dass** das Steuersystem (SS) einen uhrgesteuerten Mechanismus zur zyklischen und kontinuierlichen Systemstatusüberwachung enthält, dass mit dem Mechanismus jeder Zyklus in in der Anzahl der maximalen Komponentenzahl entsprechende Zeiteinheiten strukturierbar ist, dass die Komponenten (NS) interne Uhren enthalten, und dass von jeder Komponente (NS) innerhalb eines Zyklusses eine Tabelle für die vorhandenen Komponenten anlegbar und als Entscheidungsgrundlage für die Festlegung jeweils teilnehmender Komponenten einsetzbar ist.

## Claims

1. A computerised control system for a building machine (X), particularly a road finisher (F), with components (NS) which are incorporated in the control system and generate data and/or react to transmitted data, with a CAN-Bus (2) which is connected to a machine control system (CPU) and to which the components are connected as bus subscribers in interfaces with which there are associated CAN interface microprocessors (7), **characterised in that** each interface has a junction box (3) for at least one component (NS), **in that** the CAN interface microprocessor (7) is incorporated either in the junction box (3) or in the component (NS) and **in that** at least one image impedance is implemented, as an electronic identification element (8, 8'), in the junction box (3) and/or in the component (N/S).

2. A computerised control system according to claim 1, **characterised in that** the component (NS) comprises a plug mounted in the junction box (3) and **in that** the image impedance is disposed in the plug.

3. A computerised control system according to claim 1, **characterised in that** an attachment situation image impedance is additionally provided in the junction box (3) or the image impedance provided in the junction box (3) is additionally constructed as an attachment situation image impedance.

4. A computerised control system according to at least one of the preceding claims, **characterised in that** the components (NS) are electronic sensors of an electronic screed levelling system (N) of a road finisher (F) and **in that** the sensors are interchangeably connected to the CAN bus (2).

5. A computerised control system according to claim 4, **characterised in that** each sensor (NS) comprises at least one sensor element and an electronic evaluator (6) for the image impedance.

6. A computerised control system according to claim 1, **characterised in that** the component (NS) has available at least one standard transmission data object (DO), each such object being divided up into an identification part (ID) and a data part (DT) and **in that** the data part (DT) contains information (OT) either concerning the location and type and the like of the component and/or concerning measurements, system states, or the like, for transmission.

7. A computerised control system according to claim 1, **characterised in that** at least one component (NS) has available an expanded transmission data object (ESDO) for point-to-point transmission between bus subscribers, which object in its identification part (ID) contains information (QZ) concerning the source and at least one target of the transmission.

8. A computerised control system according to claim 1, **characterised in that** at least one component (NS) has available a reception data object (EDO) which in its data part (DT) contains information for internal data further processing by the receiver.

9. A computerised control system according to claim 1, **characterised in that** the control system (SS) comprises a clock-controlled mechanism for cyclic and continuous system status monitoring, **in that** each cycle can be structured by the mechanism into a number of time units corresponding to the maximum number of components, **in that** the components (NS) contain internal clocks, and **in that** a table for the existing components can be applied from each component (NS) within a cycle and be used as a decision basis for determining respective subscribing components.

## Revendications

1. Système de commande informatisé d'une machine de chantier (X), plus particulièrement d'un finisseur (F) de voie, avec des composants (NS), générant des données et/ou réagissant à des données transmises, intégrés dans le système de commande, avec un bus CAN (2), relié à une commande (CPU) de la machine, auquel les composants sont reliés, en tant qu'utilisateurs du bus, dans des interfaces auxquelles sont associés des microprocesseurs d'interfaces CAN (7), **caractérisé en ce que** chaque interface comprend une prise de raccordement (3) pour au moins un composant (NS), **en ce que** le microprocesseur d'interface CAN (7) est intégré soit dans la prise de raccordement (3) soit dans les composants (NS) et **en ce que**, en tant qu'élément d'identification électronique (8, 8'), au moins une résistance caractéristique est prévue dans la prise de raccordement (3) et/ou dans le composant (N/S).

2. Système de commande informatisé selon la revendication 1, **caractérisé en ce que** le composant (NS) comprend un connecteur disposé dans la prise de raccordement (3) et **en ce que** la résistance caractéristique est disposée dans le connecteur.

3. Système de commande informatisé selon la revendication 1, **caractérisé en ce que**, dans la prise de raccordement (3), une résistance caractéristique de la situation du montage est en outre prévue ou **en ce que** la résistance caractéristique prévue dans la prise de raccordement (3) est conçue en outre comme une résistance caractéristique de la situation du montage.

4. Système de commande informatisé selon au moins l'une des revendications précédentes, **caractérisé en ce que** les composants (NS) sont des capteurs électroniques d'un système électronique de nivellement à madriers encastrés (N) d'un finisseur (F), et **en ce que** les capteurs sont reliés de manière interchangeable au bus CAN (2).

5. Système de commande informatisé selon la revendication 4, **caractérisé en ce que** chaque capteur (NS) comprend au moins un élément de détection et une électronique d'analyse (6) pour la résistance caractéristique.

6. Système de commande informatisé selon la revendication 1, **caractérisé en ce que** le composant (NS) dispose d'au moins un objet standard de données émises (DO) divisé en une partie d'identification (ID) et une partie de données (DT), et **en ce que** la partie de données (DT) contient des informations (OT) soit sur le lieu et le type ou autres du composant et/ou sur les valeurs de mesure, les états du système ou autres, à déterminer.

7. Système de commande informatisé selon la revendication 1, **caractérisé en ce qu'**au moins un composant (NS) dispose d'un objet standard de données émises (ESDO), pour une transmission point à point entre des utilisateurs du bus, qui contient, dans sa partie d'identification (ID) des informations (QZ) sur la source et au moins une destination de la transmission.

8. Système de commande informatisé selon la revendication 1, **caractérisé en ce qu'**au moins un composant (NS) dispose d'un objet de données reçues (EDO) qui contient, dans sa partie de données (DT) des informations pour un traitement interne supplémentaire de données par le récepteur.

9. Système de commande informatisé selon la revendication 1, **caractérisé en ce que** le système de commande (SS) contient un mécanisme contrôlé par une horloge pour la surveillance cyclique et continuelle du système, **en ce que**, avec le mécanisme, chaque cycle peut être structuré en unités de temps correspondant au nombre maximal de composants, **en ce que** les composants (NS) comprennent des horloges internes et **en ce qu'**un tableau peut être appliqué par chaque composant (NS) à l'intérieur d'un cycle pour les composants existants et peut être utilisé en tant que base de décision pour la détermination des composants utilisateurs.
